# EUROPEAN PATENT SPECIFICATION

(11) **EP 3 764 336 B1**
(45) Date of publication and mention of the grant of the patent: **17.01.2024**
(21) Application number: 20185519.4
(22) Date of filing: 13.07.2020
(51) Int. Cl.: G08G 1/14, B62D 15/02

(54) **SYSTEM AND METHOD FOR SUPPORTING AUTOMATED VALET PARKING, AND INFRASTRUCTURE AND VEHICLE FOR REALIZING SAME**
SYSTEM UND VERFAHREN ZUR UNTERSTÜTZUNG DES AUTOMATISCHEN PARKENS DURCH EINEN PARKSERVICE SOWIE INFRASTRUKTUR UND FAHRZEUG ZU DESSEN DURCHFÜHRUNG
SYSTÈME ET PROCÉDÉ PERMETTANT DE PRENDRE EN CHARGE UN STATIONNEMENT AUTOMATISÉ DE VOITURIER ET INFRASTRUCTURE ET VÉHICULE POUR LES METTRE EN OEUVRE

(30) Priority: 11.07.2019 KR 20190084034; 10.07.2020 KR 20200085186
(43) Date of publication of application: 13.01.2021
(73) Proprietor: HYUNDAI MOTOR COMPANY, Seoul 06797 (KR); Kia Corporation, Seocho-gu Seoul 06797 (KR)
(72) Inventor: KANG, Dong Hoon, 05576 Seoul (KR)
(74) Representative: Isarpatent

(56) References cited:
- EP-A1- 2 957 481
- US-A1- 2010 156 672
- US-A1- 2017 351 267

## Description

### CROSS REFERENCE TO RELATED APPLICATION

The present application claims priority to Korean Patent Application No. 10-2019-0084034, filed July 11, 2019.

### BACKGROUND OF THE INVENTION

### 1. Field of the Invention

The present invention relates to a system and method for supporting automated valet parking and to an infrastructure and vehicle for realizing same. More particularly, the present invention relates to an automated valet parking technology enabling a vehicle to autonomously travel to an empty parking space with the help of communication between the vehicle and an infrastructure. The present invention also relates to an automated parking technology enabling a vehicle to autonomously travel from a parking slot to a pickup area with the help of communication between the vehicle and an infrastructure.

### 2. Description of the Related Art

Many modern cities suffer from various problems associated with vehicle parking. For example, there is a risk of a car collision in a parking lot. For parking in crowded places such as large shopping centers, it takes long time and much energy to park a car due to traffic congestion before entering a parking lot. In addition, it takes long time and much energy to locate an empty parking space even after entering a parking lot. In addition, there is inconvenience that a driver has to move to a spot at which his or her vehicle is parked at the time of leaving the visited area or that a driver often has difficulty in retrieving his or her vehicle due to forgetting the place where his or her vehicle is parked.

### 3. Related Prior Art

Patent Literature US 2017/351267 A1 provides a method for automatically transporting a vehicle from a transfer zone to an assigned parking space within a predefined parking facility with the aid of a parking facility monitoring system including at least one stationary sensor unit, and pieces of information about the present vehicle position being transmitted to a central control unit.

### SUMMARY OF THE INVENTION

The present invention has been made in view of the problems occurring in the related art and an objective of the present invention is to enable an automated valet parking service by which a driver can leave his or her vehicle at a predetermined drop-off area and the vehicle autonomously travels to an empty parking space within a parking lot and then parks there.

Another objective of the present invention is to enable an automated valet parking service by which, when a driver claims his or her vehicle, the vehicle can autonomously travel from a parking space to a predetermined pickup area where the driver waits for the vehicle and the driver can conveniently leave the parking lot.

A method of performing automated valet parking using an infrastructure, in accordance with an example of the present disclosure, may include: receiving an automated valet parking service request for a vehicle; transmitting to the vehicle a first guide route leading from a current location of the vehicle to a first parking space for the vehicle; and controlling the vehicle parked in the first parking space to move to a second parking space.

According to the present invention, an automated valet parking system using communication between an infrastructure and an autonomous vehicle to perform automated value parking is provided, as defined by independent claim 1. The autonomous vehicle operates in at least one mode selected from among: an inactive mode in which settings for communication between the infrastructure and the vehicle are not yet configured; a ready mode in which the vehicle stays at a drop-off area and is identified by the infrastructure for checking in; a sleep mode in which the autonomous vehicle waits for an instruction transmitted from the infrastructure; a standby mode in which the autonomous vehicle waits for information on a destination and a route transmitted from the infrastructure; a driving mode in which the vehicle autonomously travels to the destination along the route within a parking lot; a risk management mode in which an error occurs while the vehicle is in the driving mode, wherein the error is at least one of a communication error between the vehicle and the infrastructure, an error associated with autonomous traveling of the vehicle comprising abrupt stopping of the engine, malfunctioning of cameras or ultrasonic sensors, presence of a person in the vehicle, and an error associated with the facility of the infrastructure comprising malfunctioning of sensors in the infrastructure, presence of an animal in the parking lot, presence of a non-temporary obstacle on the route; an emergency stop mode that is entered when a predetermined period of time has elapsed after the vehicle enters the risk management mode; and a recovery mode in which the vehicle waits for the error to be fixed through human intervention because the error is not fixable without human intervention. A transition from the risk management mode to the standby mode or the driving mode occurs when the error is fixed while the vehicle is in risk management mode.

A program including instructions for performing the method of performing automated valet parking in accordance with an example of the present disclosure may be stored in a computer-readable storage medium.

### BRIEF DESCRIPTION OF THE DRAWINGS

FIG. 1 is a block diagram illustrating an automated valet parking system according to the present invention;
FIG. 2 is a view illustrating an automated valet parking apparatus according to an example of the present disclosure;
FIG. 3 is a conceptual view illustrating an automated valet parking system and an automated valet parking method according to an example of the present disclosure;
FIGS. 4A and 4B are diagrams illustrating automated valet parking operations performed by an infrastructure and a vehicle in accordance with the present disclosure;
FIG. 5 is a diagram illustrating communication between the infrastructure and the vehicle that work in conjunction with each other to perform automated valet parking, in accordance with the present disclosure;
FIG. 6 is a diagram illustrating communication between the infrastructure and the vehicle that work in conjunction with each other to perform automated valet parking, in accordance with the present disclosure;
FIG. 7 is a diagram illustrating communication between the infrastructure and the vehicle that work in conjunction with each other to perform automated valet parking, in accordance with the present disclosure;
FIG. 8 is a block diagram illustrating an automated parking system in accordance with one embodiment of the present disclosure;
FIG. 9 is a view illustrating an infrastructure and a marker output module used in one embodiment of the present disclosure;
FIG. 10 is a block diagram illustrating guide lamps used in one embodiment of the present disclosure;
FIG. 11 is a flowchart illustrating operation of an automated valet parking system in accordance with one embodiment of the present disclosure; and
FIG. 12 is a view illustrating multiple modes for automated valet parking performed by an automated valet parking system in accordance with one embodiment of the present disclosure.

### DESCRIPTION OF THE PREFERRED EMBODIMENTS

Herein below, exemplary embodiments of the present invention will be described in detail with reference to the accompanying drawings. The construction and operational effect of the present invention will be clearly understood from the following detailed description. Prior to describing the exemplary embodiments in detail, it is noted that throughout the drawing the same components will be denoted by the same reference numerals when possible and a detailed description about existing components and functions is omitted when the subject matter of the present invention may be obscured by the description.

It is also noted that terms used in the detailed description of the invention are defined below.

The term "driver" refers to a person who uses an automated valet parking service provided by an automated valet parking system.

The term "driving authority" refers to the authority to control vehicle operations. The term "vehicle operation" refers to a vehicle operation such as steering, acceleration, braking, gear shifting, vehicle starting, and door locking and unlocking, and the like.

The term "vehicle" refers to a vehicle having an automated valet parking function.

The term "control center" refers to a system that can monitor vehicles parked in a parking garage or facility. The control center determines a target position, a guide route, and a permitted driving area for each vehicle. The control center may transmit a driving start instruction or an emergency stop instruction to a vehicle.

The term "infrastructure" refers to a parking facility and/or a collection of sensors installed in the parking facility. Alternatively, in some cases, the term "infrastructure" may refer to the control center that controls a parking lot gate, vehicles in a parking lot, etc.

The term "target position" refers to an empty parking space available for parking. In some cases, the term "target position" may refer to a pickup area where a driver gets his or her vehicle returned to leave the parking lot.

The term "guide route" refers to a route along which a vehicle travels to reach a target position. For example, in the case of a parking event, the guide route may be a route leading from a drop-off area to an empty parking space. The guide route may be provided in the form of a set of instructions (for example, "move 50 m straight ahead", "turn left at the next corner", and "move 10 m straight").

The term "driving route" refers to a driving path or lane along which a vehicle travels.

The term "permitted driving area" refers to an area where a vehicle can drive within a parking lot. For example, one example of the permitted driving area is the driving route. The permitted driving area is defined with barrier walls, parked vehicles, parking lines, etc.

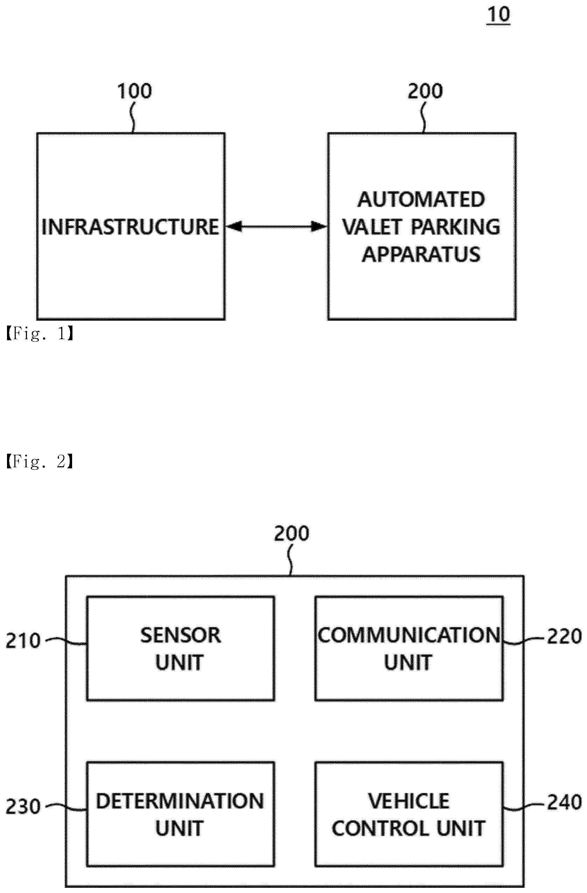

FIG. 1 is a view illustrating an automated valet parking system in accordance with the present invention. Referring to FIG. 1, an automated valet parking system 10 includes an infrastructure 100 and an automated valet parking apparatus 200.

The infrastructure 100 refers to an apparatus, facility, or system for operating, managing, and controlling the automated valet parking system 10. The infrastructure 100 includes a parking facility. According to embodiments, the infrastructure 100 may include sensors, communication devices, alarm devices, display devices, and a server device that controls these devices. Alternatively, in some cases, the term "infrastructure" may refer to a control center that controls gates of a parking lot, vehicles in the parking lot, etc.

The automated valet parking apparatus 200 refers to a vehicle capable of performing automated valet parking. In some embodiments, the automated valet parking apparatus 200 may refer to a component or a set of components included in a vehicle capable of performing automated valet parking.

FIG. 2 is a view illustrating an automated valet parking apparatus in accordance with one example of the present disclosure. Referring to FIG. 2, the automated valet parking apparatus 200 (i.e., vehicle) includes a sensor unit 210, a determination unit 230, a vehicle control unit 240, and a communication unit 220.

The sensor unit 210 senses parameters of a surrounding environment of the automated valet parking apparatus 200. Depending on embodiments, the sensor unit 210 measures the distance between the automated valet parking apparatus 200 and a specific object or detects objects around the automated valet parking apparatus 200. For example, the sensor unit 210 includes at least one kind of sensor selected from among an ultrasonic sensor, a radar sensor, a Lidar sensor, a camera, an infrared sensor, a thermal sensor, and a millimeter wave sensor.

The sensor unit 210 transmits data resulting from detections thereof to the communication unit 220 or the vehicle control unit 240.

The communication unit 220 communicates the data with the infrastructure facility 100. This communication is called vehicle-to-infra (V2I) communication. The communication unit 220 communicates the data with other vehicles. This communication is called vehicle-to-vehicle (V2V) communication. The V2I communication and the V2V communication are collectively called vehicle-to-everything (V2X) communication. Depending on embodiments, the communication unit 220 receives the data (for example, a target position, a guide rote, a driving route, an instruction, etc.) from the infrastructure 100, processes the received data, and transmits the processed data to the determination unit 230. The communication unit 220 transmits data collected by the vehicle 200 to the infrastructure 100. Depending on embodiments, the communication unit 220 communicates the data with the mobile terminal of the driver of the vehicle 200.

The communication unit 220 receives and transmits the data according to a wireless communication protocol or a cable communication protocol. Examples of the wireless communication protocol include, but are not limited to, wireless LAN (WLAN), digital living network alliance (DLNA), wireless broadband (Wibro), world interoperability for microwave access (Wimax), global system for mobile communication (GSM), code division multi access (CDMA), code division multi access 2000 (CDMA2000), enhanced voice-data optimized or enhanced voice-data only (EV-DO), wideband CDMA (WCDMA), high speed downlink packet access (HSPDA), high speed uplink packet access (HSUPA), IEEE802.16, long term evolution (LTE), long term evolution-advanced (LTE-A), wireless mobile broadband service (WMBS), Bluetooth, infrared data association (IrDA), ultra-wideband (UWB), ZigBee, near field communication (NFC), ultra sound communication (USC), visible light communication (VLC), Wi-Fi, and Wi-Fi direct. Examples of the cable communication protocol include, but are not limited to, wired local area network (LAN), wired wide area network (WAN), power line communication (PLC), USB communication, Ethernet communication, serial communication, and optical/coaxial cable communication. Other protocols that support communication between devices fall within the definition of the communication protocol that is used in the present invention.

The determination unit 230 controls the overall operation of the vehicle 200. The determination unit 230 controls the vehicle control unit 240 on the basis of the data transmitted from the sensor unit 210 and from the communication unit 220. Depending on embodiments, the determination unit 230 generates a control signal for controlling the vehicle control unit 240 on the basis of the data transmitted from the infrastructure 100 and then transmits the control signal to the vehicle control unit 240.

That is, the determination unit 230 refers to a device that performs a series of calculations or makes a series of determinations to control the vehicle 200 and to perform automated valet parking. For example, the determination unit 230 is a processor that operates according to a computer program including instructions for performing automated valet parking.

The vehicle control unit 240 controls the vehicle 200 on the basis of the determinations made by the determination unit 230. Depending on embodiments, the vehicle control unit 240 controls the vehicle 200 according to the control signal transmitted from the determination unit 230. For example, the vehicle control unit 240 controls various vehicle operations such as driving (also referred to as traveling or moving), stopping, re-driving, steering, accelerating, decelerating, lighting of lamps, alarm sounding, etc.

That is, the vehicle control unit 240 functions to control all kinds of operations of the vehicle 200 described herein.

On the other hand, although not described herein, the operations and/or functions of the vehicle 200 described in the description herein are performed by the conjunction of one or more components selected from among the sensor unit 210, the communication unit 220, the determination unit 230, and the vehicle control unit 240.

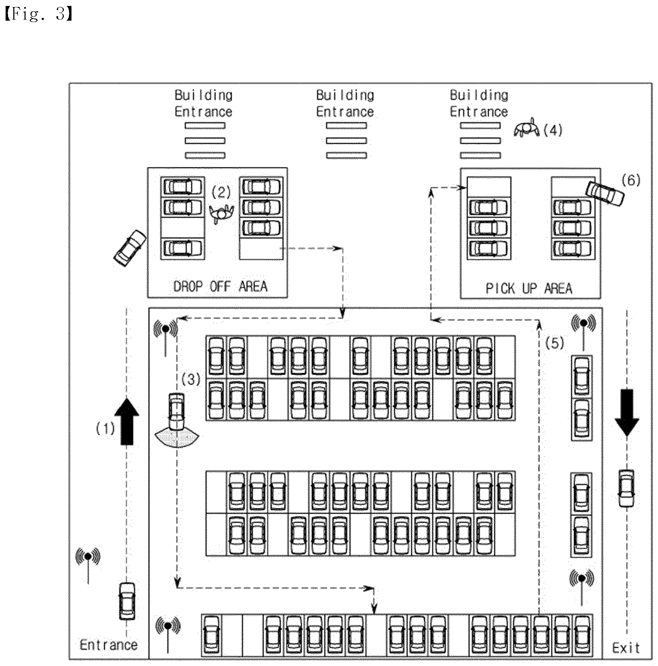

FIG. 3 is a conceptual diagram illustrating an automated valet parking system and an automated valet parking method in accordance with the present disclosure.

Referring to FIG. 3, in step (1), a vehicle enters a parking lot and moves to a drop-off area in the parking lot.

In step (2), the driver leaves the vehicle at the drop-off area and the authority to drive or control the vehicle is delegated to the infrastructure. Hereinafter, the authority to drive or control the vehicle is referred to as driving authority.

In step (3), the infrastructure searches for empty parking spaces within the parking lot and assigns a suitable empty parking space to the vehicle. The infrastructure determines a guide route leading to the assigned empty parking space. After the parking space and the guide route are determined, the vehicle autonomously travels along the guide route to reach the parking space and performs automated parking.

In step (4), the driver makes a vehicle return request and moves to a pickup area where the vehicle will be returned to the driver.

In step (5), the infrastructure determines a suitable target position where the vehicle will be returned to the driver. For example, the suitable target position may be an empty parking space of multiple parking slots within the pickup area. In addition, the infrastructure determines a guide route which will guide the vehicle to the target position. After the target position and the guide route are determined and transmitted to the vehicle, the vehicle autonomously travels along the guide route to reach the target position and parks at the target position.

In step (6), the driver arrives at the pickup area and takes over the driving authority for the vehicle. The driver drives the vehicle toward an exit of the parking lot.

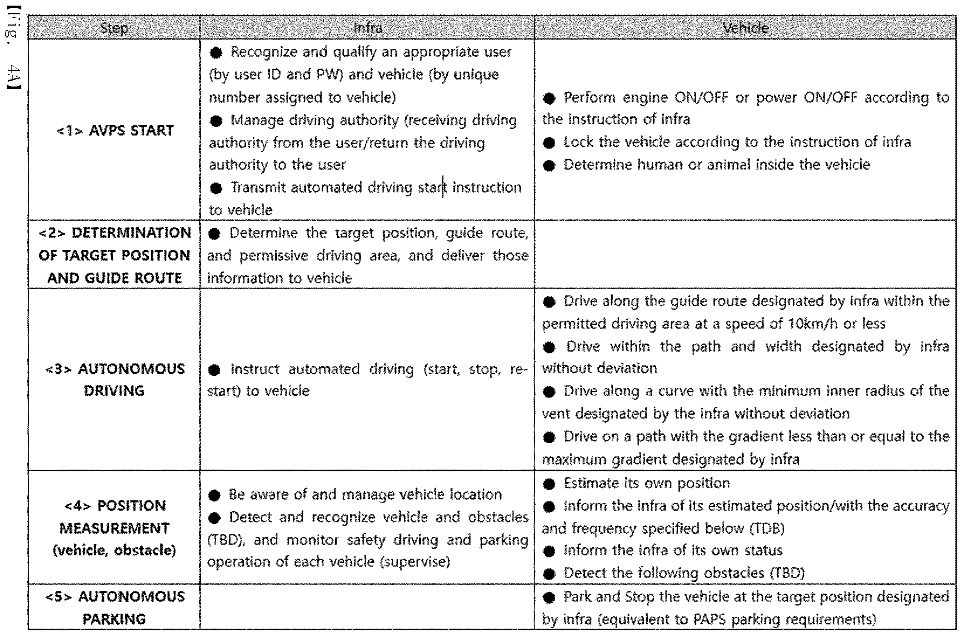

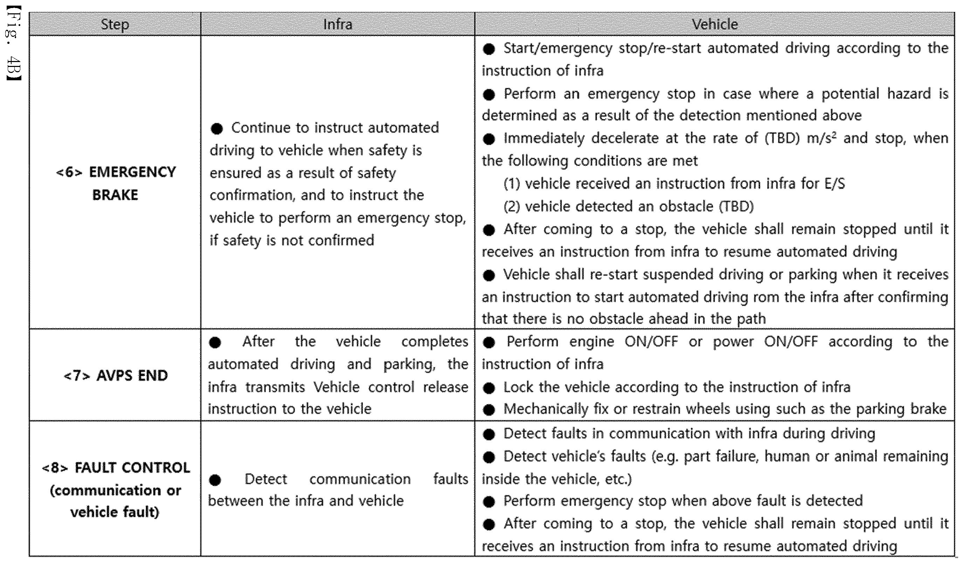

FIGS. 4A and 4B are diagrams illustrating automated valet parking operations performed by an infrastructure and a vehicle in accordance with the present disclosure.

In step (1), preparation operations of the infrastructure and the vehicle to start an automated valet parking procedure are performed. The infrastructure identifies a driver and a vehicle and determines whether the driver and the vehicle are qualified. For example, the infrastructure determines whether the driver is a qualified driver by reading an identification number (ID) or a password input by the driver. In addition, the infrastructure determines whether the vehicle is a qualified vehicle by reading an identification number (VIN) of the vehicle. The vehicle can turn on and off the engine by itself. The vehicle can turn on and off the power supply by itself. A state in which the engine of the vehicle is turned off but the power supply is turned on is referred to as an accessory-on (ACC-ON) state. The engine on/off and the power supply on/off of the vehicle are performed according to instructions transmitted from the infrastructure or automatically performed without depending on the instructions transmitted from the infrastructure. The vehicle can lock and unlock the doors by itself. The locking and unlocking of the vehicle doors are performed according to instructions transmitted from the infrastructure or are autonomously performed by the vehicle without depending on the instructions transmitted from the infrastructure. When the vehicle proceeds to an automated parking stage, it is preferable to lock the vehicle doors. At this stage, the driving authority for the vehicle is delegated to the infrastructure from the vehicle driver. The driving authority for a vehicle means an authority to control the vehicle. With the driving authority, it is possible to control vehicle operations such as steering, accelerating, braking, gear shifting, engine on/off, door locking/unlocking, and the like. Since the driving authority is delegated to the infrastructure, the infrastructure can take complete control of the vehicle during the automated valet parking of the vehicle. Accordingly, it is possible to lower a probability that the vehicle improperly operates during automated valet parking, thereby preventing the vehicle from experiencing an in-parking lot accident. However, in some cases, the driving authority may be partially delegated to the infrastructure so that the vehicle can still control some of the vehicle operations. Alternatively, the driving authority may be shared by the vehicle and the infrastructure. For example, a braking operation needs to be performed when an emergency occurs during the automated valet parking. Therefore, it is preferable for the vehicle to apply a brake without intervention of the infrastructure when the vehicle senses a danger with help of an ADAS sensor or the like. In addition, the vehicle checks whether a person or animal is present in the vehicle before starting parking. Since a parking duration from the completion of the automated valet parking to the vehicle return to the driver is likely to be long, if a person or animal accidentally remains in the vehicle while the vehicle is parked, the person or animal would be in danger. Therefore, it is important to ensure that the vehicle is empty before the vehicle is parked. Whether a person or animal remains in the vehicle or not is checked with a built-in sensor. On the other hand, the driving authority is automatically returned to the driver from the infrastructure and/or the vehicle when the automated valet parking is finished.

An exit procedure is similar to the entering procedure described above. For exiting, the vehicle receives a return request. The driver (i.e., owner or user) of the vehicle makes a vehicle return request using a device (for example, Smartphone or mobile terminal) that can communicate with the infrastructure. When the driver makes the vehicle return request, the driver transmits vehicle information and driver information to the infrastructure using a mobile terminal. The infrastructure determines whether a target vehicle requested to be returned is actually parked within the parking lot on the basis of the vehicle information and the driver information received from the driver and checks whether the driver is a qualified driver. When the vehicle receives the vehicle return request, the vehicle or the infrastructure checks whether a passenger is present in the vehicle and proceeds to the subsequent stage when it is confirmed that no passenger is present in the vehicle. When the driver sends the vehicle return request, the driving authority is delegated from the driver to the vehicle or the infrastructure. That is, when the driver sends the vehicle return request, the driver loses right to control the vehicle. That is, the vehicle operates in accordance with a control signal from the infrastructure or control of its own control mechanism. For example, according to the control signal transmitted from the infrastructure, when the vehicle departs the parking space the vehicle doors are locked, and when the vehicle arrives at the pickup area the vehicle doors are unlocked. When the vehicle arrives at the pickup area, the driving authority is returned to the driver from the vehicle or the infrastructure.

However, in some cases, as described above, the driving authority may be partially delegated to the infrastructure from the vehicle. Alternatively, the driving authority may be shared by the vehicle and the infrastructure. After receiving the vehicle return request, the vehicle receives a driving start signal from the infrastructure and then leaves the parking space. Before leaving the parking space, the infrastructure turns on the engine of the vehicle. The infrastructure transmits a notification to the driver so that the driver can be aware of the vehicle state.

In step (2), a target position, a guide route, and a driving route are determined. The determinations of the target position, the guide route, and the driving route are made by the infrastructure. The target position, the guide route, and the driving route determined by the infrastructure are delivered from the infrastructure to the vehicle. The target position, the guide route, and the driving route determined by the infrastructure are delivered to the vehicle both in the events that the vehicle enters the parking lot and the vehicle exits the parking lot.

In step (3), autonomous traveling of the vehicle is performed within the parking lot. The autonomous traveling of the vehicle includes driving, stopping, and re-driving. The autonomous traveling of the vehicle is performed according to instructions transmitted from the infrastructure to the vehicle. Alternatively, the autonomous traveling of the vehicle may be performed without relying on the instructions transmitted from the infrastructure. The vehicle can autonomously travel to the target position along the guide route included in the permitted driving area. During the autonomous traveling of the vehicle, the vehicle is controlled to travel at a preset speed or below. This preset speed may be a value transmitted from the infrastructure to the vehicle or may be a value stored in the vehicle. In addition, the vehicle is controlled not to deviate from an error margin of the given guide route when traveling along the guide route. This preset error margin may be a value transmitted from the infrastructure to the vehicle or may be a value stored in the vehicle. In addition, the vehicle may turn with a predetermined minimum turning radius when it is necessary to curve around a corner during the autonomous traveling along the guide route. This preset minimum turning radius may be a value transmitted from the infrastructure to the vehicle or may be a value stored in the vehicle. The vehicle is controlled not to exceed a predetermined maximum acceleration value when autonomously traveling along the guide route. This preset maximum acceleration value may be a value transmitted from the infrastructure to the vehicle or may be a value stored in the vehicle.

In step (4), a position measurement process is performed. The target of the position measurement may be a vehicle to be parked in a parking lot, an obstacle existing in the parking lot, or a vehicle that is already parked in the parking lot. The infrastructure measures the position of the vehicle or the obstacle and stores the measured position in a database. The infrastructure identifies and detects vehicles or obstacles and monitors the safety of each of the plurality of vehicles in the parking lot. In addition, the infrastructure monitors the operating state of the vehicle that is being parked at the target position and transmits instructions to the vehicle on the basis of the results of the monitoring. The vehicle measures its position by itself. The vehicle transmits the measured position to the infrastructure. The error of the position measured by the vehicle needs to be within a predetermined error range. The predetermined error range is determined by the infrastructure. The vehicle detects obstacles present around the vehicle, measures the positions of the respective obstacles, and transmits the measured positions to the infrastructure. The communication between the vehicle and the infrastructure is performed at a predetermined frequency.

In step (5), an automated parking operation is performed by the vehicle. The automated parking refers to an operation in which the vehicle that has reached around the target position driverlessly goes into a parking slot determined as the target position. The vehicle performs automated parking by sensing nearby obstacles or nearly vehicles that are parked, with the help of a distance sensor mounted in the vehicle. Examples of the distance sensor mounted in the vehicle include an ultrasonic sensor, a radar sensor, a lidar sensor, and a camera.

In step (6), an emergency braking operation is performed. The emergency braking of the vehicle is performed according to instructions transmitted from the infrastructure or may be performed by itself when the vehicle detects an obstacle. The infrastructure instructs the vehicle to apply an emergency brake when it is determined that an area around the vehicle is unsafe. When the infrastructure determines that the surroundings of the vehicle become safe after the emergency braking is performed, the infrastructure orders the vehicle to resume autonomous traveling or automated parking. When the vehicle detects an obstacle, the vehicle applies an emergency brake by itself. In addition, the vehicle reports the infrastructure that it has performed the emergency braking or informs the infrastructure of the type or location of an obstacle which is the cause of the emergency braking. The vehicle reduces its speed according to a predetermined deceleration value preset for the emergency braking. This predetermined deceleration value is a value determined by the infrastructure or a value stored in the vehicle. The predetermined deceleration value may be determined according to the type of an obstacle, the position of an obstacle, and the distance between the vehicle and an obstacle. The vehicle resumes autonomous traveling or automated parking upon receiving a resumption instruction for the autonomous traveling or automated parking from the infrastructure. Alternatively, the vehicle may resume the autonomous traveling or automated parking when it confirms that the obstacle is removed. The vehicle reports to the infrastructure of the resumption of autonomous traveling or automated parking and of the removal of the obstacle.

In step (7), the automated valet parking procedure is finished. After the vehicle has completed autonomous traveling or automated parking, the infrastructure issues a control release instruction to the vehicle. The vehicle can turn on and off the engine and turn on and off the power supply according to instructions received from the infrastructure or without depending on the instructions received from the infrastructure. In addition, the vehicle can lock and unlock the vehicle doors according to instructions received from the infrastructure or without depending on the instructions received from the infrastructure. Further, the vehicle can apply a parking brake according to instructions received from the infrastructure or without depending on the instructions received from the infrastructure.

In step (8), an error control operation is performed. The error control is performed when an error occurs in communication between the vehicle and the infrastructure and/or when a mechanical error of the vehicle occurs. The infrastructure monitors communication between the infrastructure and the vehicle to detect whether a communication error occurs. The vehicle detects a communication error by monitoring the communication between the infrastructure and the vehicle. The vehicle determines whether a mechanical error occurs by monitoring operating states of built-in accessories including sensors mounted therein. The vehicle detects the presence of a person or animal in the vehicle and applies an emergency brake when the presence of a person or animal is detected. The vehicle resumes automated parking or autonomous traveling according to instructions received from the infrastructure when the vehicle is in an emergency stop state. Alternatively, the vehicle may determine, by itself, whether the cause of the emergency braking is removed and resumes automated parking or autonomous traveling when the cause of the emergency parking is removed.

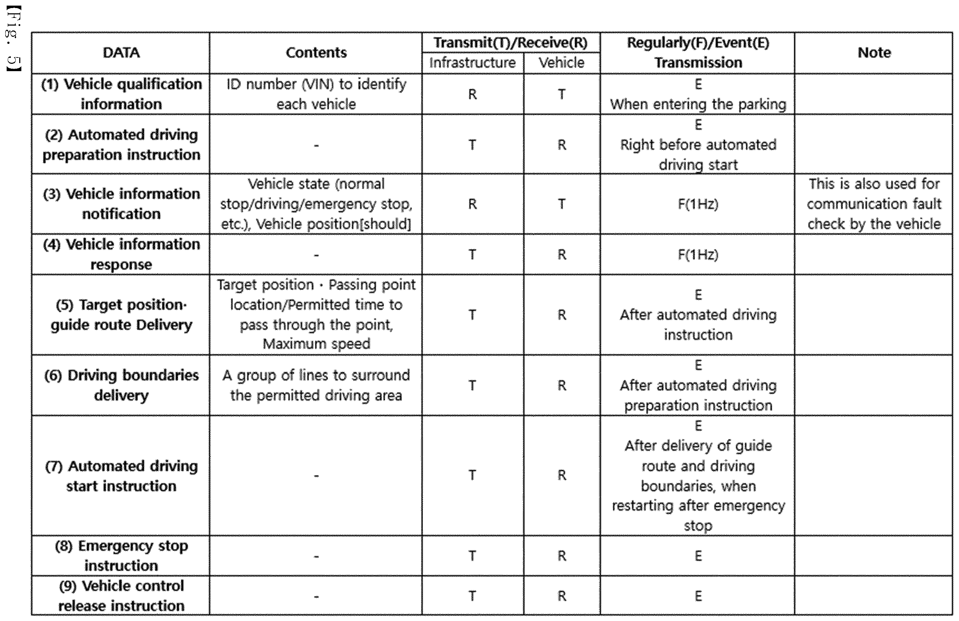

FIG. 5 is a diagram illustrating communication between the infrastructure and the vehicle that work in conjunction with each other to perform automated valet parking, in accordance with the present disclosure.

In step (1), vehicle qualification information is delivered from the vehicle to the infrastructure. The vehicle qualification information includes an identifier that distinguishes each vehicle from the other vehicles. For example, the vehicle qualification information may be a unique vehicle identification number (for example, license plate number) of the vehicle. The vehicle qualification information is delivered from the vehicle to the infrastructure at a stage in which the automated valet parking procedure is started after the vehicle enters a parking lot (refer step (1) of FIG. 4A).

In step (2), an automated valet parking preparation instruction is transmitted from the infrastructure to the vehicle. The automated valet parking preparation instruction is transmitted before the vehicle starts autonomous traveling.

In step (3), vehicle information is transmitted from the vehicle to the infrastructure. The vehicle information includes vehicle state information and vehicle position information. The vehicle state information indicates one state among a traveling state, a stopped state, an emergency stopped state. The vehicle information is transmitted periodically at a specific frequency (for example, 1 Hz which means once per second). The vehicle information is used as a parameter to determine whether a communication error has occurred between the vehicle and the infrastructure. For example, when the vehicle information does not reach the infrastructure at a specific time that is estimated on the basis of the communication frequency, the infrastructure determines that an error has occurred in communication between the vehicle and the infrastructure.

In step (4), an acknowledgment of vehicle information reception is transmitted from the infrastructure to the vehicle. The acknowledgment of vehicle information reception is transmitted at the same frequency as the transmission of the vehicle information that is transmitted in step (3). Therefore, the acknowledgment of vehicle information reception is used as a parameter to determine whether an error has occurred in communication between the vehicle and the infrastructure. For example, when the vehicle information does not reach the infrastructure at a specific time that is estimated on the basis of the communication frequency, the infrastructure determines that an error has occurred in communication between the vehicle and the infrastructure.

In step (5), a target position and a guide route are delivered from the infrastructure to the vehicle. The delivery of the target position and the guide route may be performed either before or after an automated valet parking start instruction is transmitted from the infrastructure to the vehicle.

In step (6), driving area boundary information is transmitted to the vehicle from the infrastructure. The driving area boundary information includes markers (for examples, lines demarcating parking slots, a central line, and lane boundary lines demarcating a driving lane) that mark the boundaries of a permitted driving area. The transmission of the driving area boundary information is performed after the automated valet parking preparation instruction is delivered. This driving area boundary information is transmitted from the infrastructure to the vehicle in the form of a parking lot map.

In step (7), the automated valet parking start instruction is transmitted from the infrastructure to the vehicle. The transmission of the automated valet parking start instruction is performed after the guide route and the driving area boundary information are delivered. Alternatively, the automated valet parking start instruction is transmitted when the cause of the emergency braking is removed.

In step (8), an emergency braking instruction is transmitted to the vehicle from the infrastructure.

In step (9), a vehicle control release instruction is transmitted to the vehicle from the infrastructure. The delivery of the vehicle control release instruction is performed after the vehicle is autonomously parked in a parking space.

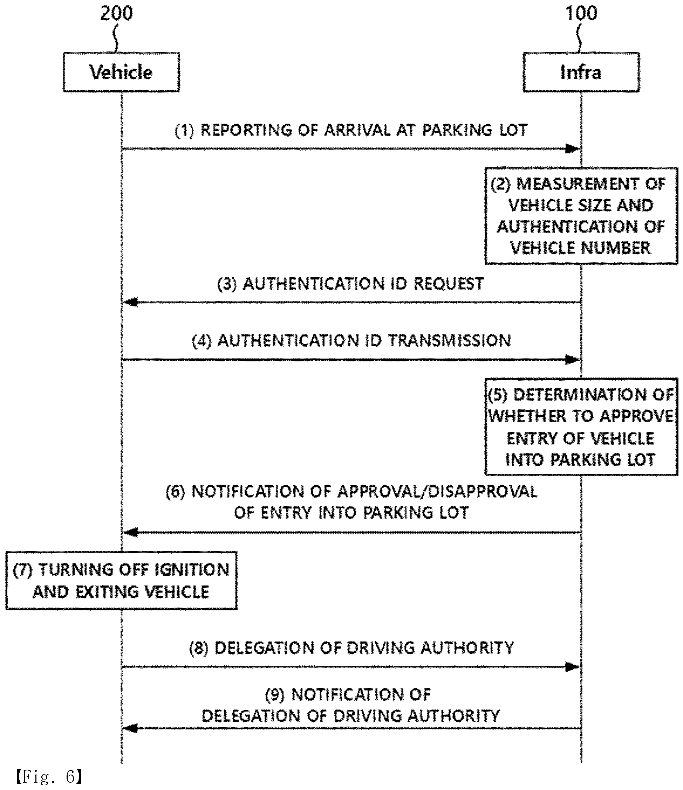

FIG. 6 is a diagram illustrating communication performed between the infrastructure 100 and the vehicle 200 that work in conjunction with each other to perform automated valet parking.

In step (1), the vehicle 200 enters a parking lot and stops at a predetermined stop position. This stop position may be an entrance gate of the parking lot. The vehicle 200 notifies the infrastructure 100 of the arrival thereof. In step (2), the infrastructure 100 checks the size of the vehicle 200 and authenticates the vehicle 200 on the basis of an authentication ID of the vehicle 200. In step (3), the infrastructure 100 transmits an authentication ID submission request to the vehicle 200. In step (4), the vehicle 200 transmits the authentication ID to the infrastructure 100. In step (5), the infrastructure 100 determines whether to allow entry of the vehicle 200 into the parking lot on the basis of the received authentication ID. In step (6), the infrastructure 100 notifies the vehicle whether the vehicle 200 is permitted to enter the parking lot according to the results of the authentication. For example, the infrastructure 100 displays a message indicating approval or disapproval of the entry of the vehicle into the parking lot on a display panel installed around the stop position. The driver drives the vehicle 200 to a drop-off area when the entry of the vehicle into the parking lot is approved. In step (7), the driver turns off the engine of the vehicle 200, gets out of the vehicle 200, locks the vehicle doors, and leaves the drop-off area. In step (8), the driving authority of the vehicle 200 is delegated from the vehicle 200 (or the driver) to the infrastructure 100. In addition, in step (9), the infrastructure 100 notifies the driver that it takes the driving authority of the vehicle 200. Such a notification may be sent to a driver's smart device through a mobile communication network.

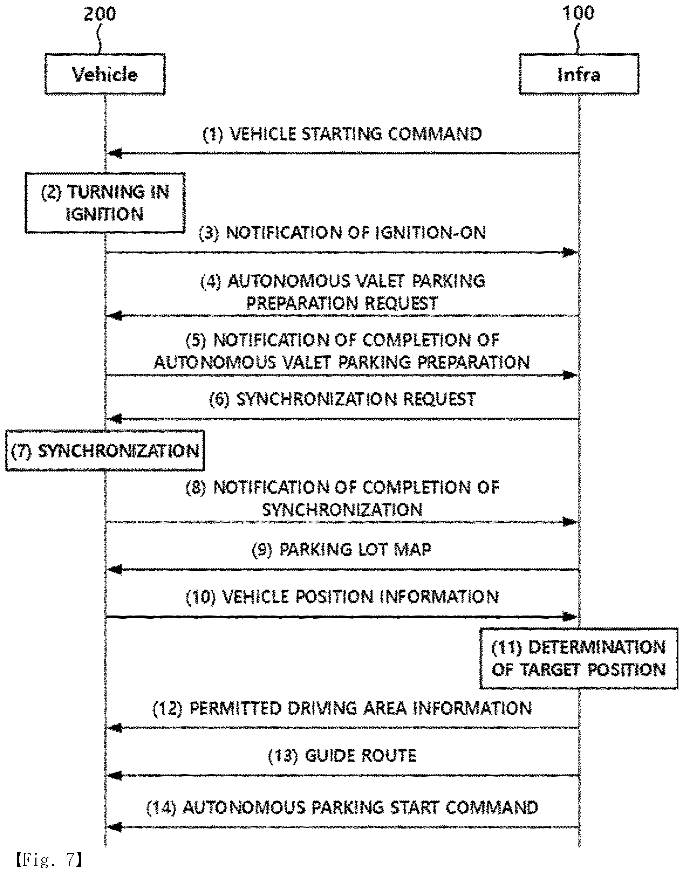

FIG. 7 is a diagram illustrating communication performed between the infrastructure 100 and the vehicle 200 that work in conjunction with each other to perform automated valet parking.

In step (1), the infrastructure 100 transmits an engine turn-on request to the vehicle 200. In step (2), the vehicle 200 turns on the engine according to the engine turn-on request transmitted from the infrastructure 100. In step (3), the vehicle 200 turns on the engine and then notifies the infrastructure 100 that the engine is turned on. In step (4), the infrastructure 100 transmits a preparation request for automated valet parking to the vehicle 200. In step (5), the vehicle 200 transmits a reply to the automated valet parking preparation request to the infrastructure 100. The reply is a message of OK indicating that the preparation for automated valet parking is completed or a message of NG indicating that the preparation for automated valet parking is not completed. In step (6), the infrastructure 100 transmits a synchronization request to the vehicle 200. The synchronization request is a request for instructing synchronization of the timer of the infrastructure 100 with the timer of the vehicle 200. For example, the synchronization request includes information about time indicated by the timer of the infrastructure 100. In step (7), the vehicle 200 performs the synchronization according to the synchronization request. In step (8), the vehicle 200 transmits a reply indicating that the synchronization is completed to the infrastructure 100. For example, until the synchronization between the timer of the infrastructure 100 and the timer of the vehicle 200 is completed, a plurality of synchronization requests may be transmitted from the infrastructure 100 to the vehicle 200. In step (9), the infrastructure 100 transmits parking lot map information to the vehicle 200. The parking lot map information includes marker information. In step (10), the vehicle 200 estimates or calculates the position of the vehicle 200 on the basis of the transmitted marker information, and the vehicle 200 transmits the estimated position of the vehicle 200 to the infrastructure 100. In step (11), the infrastructure 100 determines a target position (for example, parking space). In step (12), the infrastructure 100 transmits information on a permitted driving area to the vehicle 200. For example, the infrastructure 100 transmits boundary information of the permitted driving area to the vehicle 200. In step (13), the infrastructure 100 transmits a guide route to the vehicle 200. In step (14), the infrastructure 100 transmits an automated valet parking start instruction to the vehicle 200.

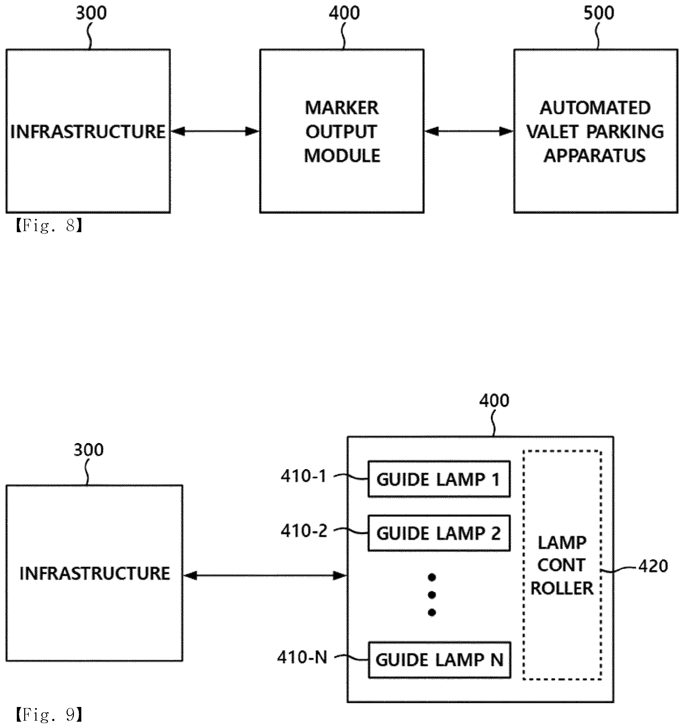

FIG. 8 is a block diagram illustrating an automated parking system in accordance with one embodiment of the present disclosure. Referring to FIGS. 1 to 8, an automated parking system 20 includes an infrastructure 300, a marker output module 400, and an automated valet parking apparatus 500.

The infrastructure 300 refers to an apparatus, facility, or system for controlling the automated valet parking system 10.

The marker output module 400 can output, display, and inspect markers. Each of the markers may be an image having a specific shape or pattern. The markers can be displayed on the surface of an object or the ground surface. The markers refer to information (for example, path, direction, speed, guide route, target position, speed limit, traffic information, etc.) associated with driving of the automated valet parking apparatus 500.

Depending on embodiments, the marker output module 400 is installed in a parking facility (or parking lot) equipped with the automated valet parking system 20 and can output markers on a surface of an object (for example, ground surface or wall surface) in the parking facility or parking lot.

The marker output module 400 can output a set of markers for each automated valet parking apparatus 500 to be autonomously parked. For example, when a first automated valet parking apparatus autonomously travels along a first guide route to a first designated parking space and a second automated valet parking apparatus autonomously travels along a second guide route to a second designated parking space, the marker output module 400 outputs a first set of markers in a first color to represent the first guide route and a second set of markers in a second color to represent the second guide route. For example, the marker output module 400 can output a set of markers for each automated valet parking apparatus 500, in which the multiple sets of markers are differentiated from each other by color, shape, size, presence or absence of outlines, presence or absence of specific codes, etc.

Accordingly, when multiple automated valet parking apparatuses autonomously travel to respective parking spaces to perform automated parking, the markers to represent the guide routes for the respective automated valet parking apparatuses can be differentiated.

The automated valet parking system 20 to be described below with reference to FIG. 8 can perform the functions of the automated valet parking system 10 that has been described above with reference to FIG. 1. The infrastructure 300 to be described with reference to FIG. 8 can perform the functions of the infrastructure 100 that has been described with reference to FIG. 1. The automated valet parking apparatus 500 to be described with reference to FIG. 8 can perform the functions of the automated valet parking apparatus 200 that has been described with reference to FIG. 1. Hereinafter, a redundant description of the same components or functions will not be given.

The infrastructure 300 is configured to communicate with the marker output module 400 and the automated valet parking apparatus 500. In some embodiments, the infrastructure 300 monitors the state of communication with the marker output module 400 and with the automated valet parking apparatus 500 while communicating with the marker output module 400 and the automated valet parking apparatus 500.

The infrastructure 300 controls the marker output module 400. In some embodiments, the infrastructure 300 controls the marker output module 400 to output a set of markers.

The infrastructure 300 determines the guide route or the driving path for the automated valet parking apparatus 500 and controls the marker output module 400 to output a set of markers corresponding to the determined guide route. In some embodiments, the infrastructure 300 selects a portion of the determined guide route and controls the marker output module 400 to output markers corresponding to the selected portion of the guide route. For example, when the determined guide route is provided as a series of instructions consisting of "move 50 m straight ahead", "turn left", "move 100 straight ahead", and "turn right", the infrastructure 300 may control the marker output module 400 to output a marker corresponding to the instruction "turn left".

The marker output module 400 outputs markers in accordance with a control signal from the infrastructure 300.

In some embodiments, the marker output module 400 receives a guide route from the infrastructure 300 and outputs markers corresponding to the guide route. Specifically, the marker output module 400 selects markers corresponding to the received guide route from among multiple markers stored therein and outputs the selected markers. Specifically, the marker output module 400 may use marker identifiers to select markers corresponding to the received guide route from among multiple markers stored therein.

In some embodiments, the marker output module 400 receives marker identifiers from the infrastructure 300 and outputs markers corresponding to the respective marker identifiers. The marker identifiers may be data indicating specific markers, respectively.

In some embodiments, the infrastructure 300 determines marker identifiers on the basis of a guide route and transmits the determined marker identifiers to the marker output module 400. For example, when the guide route is a specific instruction of "turn left", the infrastructure 300 determines a marker identifier indicating a marker corresponding to a left turn.

The automated valet parking apparatus 500 recognizes the markers output by the marker output module 400 and performs automated valet parking on the basis of the recognized markers. In some embodiments, the automated valet parking apparatus 500 recognizes markers using a built-in camera.

Specifically, the automated valet parking apparatus 500 sets a predetermined area around itself as a search area and recognizes markers displayed within the search area. The predetermined area is set in a predetermined manner.

The automated valet parking apparatus 500 acquires information such as speed, direction, etc. from the recognized markers and performs automated valet parking on the basis of the acquired information. In some embodiments, the automated valet parking apparatus 500 selects markers corresponding to the recognized markers from among multiple markers stored therein and performs automated valet parking on the basis of the information corresponding to the selected markers. For example, when the recognized marker is the same or similar to a marker indicating a left turn among the stored markers, the automated valet parking apparatus 500 turns left during traveling to the target position.

The automated valet parking apparatus 500 notifies the infrastructure 300 of recognition failure when it cannot recognize a marker. In some embodiments, when the automated valet parking apparatus 500 cannot recognize a marker, it notifies the infrastructure 300 of such a situation.

For example, when no marker is displayed or a portion of a marker is obscured by an obstacle, the automated valet parking apparatus 500 notifies the infrastructure 300 of a corresponding situation.

For example, when proper information cannot be obtained from a displayed marker, or a displayed marker is abnormal, the automated valet parking apparatus 500 notifies the infrastructure 300 of the situation in which proper information cannot be obtained from the displayed information or the situation in which the displayed marker is abnormal.

For example, when a marker is difficult to discern due to a low resolution, the marker automated valet parking apparatus 500 notifies the infrastructure 300 of the situation in which the displayed marker has a low resolution.

The automated valet parking apparatus 500 transmits information obtained from the recognized marker to the infrastructure 300. In some embodiments, the automated valet parking apparatus 500 transmits information about the marker and information (for example, position) about the automated valet parking apparatus 500 to the infrastructure 300.

In the automated valet parking system in examples of the present disclosure, the marker output module 400 displays markers in accordance with a control signal from the infrastructure 300 and the automated valet parking apparatus 500 performs automated valet parking on the basis of the displayed markers.

FIG. 9 is a view illustrating an infrastructure and a marker output module used in one embodiment of the present disclosure. Referring to FIGS. 1 to 9, the marker output module 400 includes multiple guide lamps 410-1, 410-2, ..., and 410-N (N is a natural number of two or greater). In some embodiments, the marker output module 400 further includes a lamp controller 420 that controls the multiple guide lamps 410-1, 410-2, ..., and 410-N.

Each of the multiple guide lamps 410-1, 410-2, ..., and 410-N is a device that display an image at a specific position (for example, position on the ground surface).

In some embodiments, each of the multiple guide lamps 410-1, 410-2, ..., and 410-N includes a light source and a film with a specific pattern. A marker may be display in a manner that a light beam emitted from the light source passes through the film and the contents of the film is projected on the ground surface. That is, each of the multiple guide lamps 410-1, 410-2, ..., and 410-N includes multiple films corresponding to respective markers. A specific film is selected, and a specific marker corresponding to the contents of the specific film is displayed.

The multiple guide lamps 410-1, 410-2, ..., and 410-N includes an LED lamp as the light source, but the light source is not limited to the LED lamp.

In some embodiments, the multiple guide lamps 410-1, 410-2, ..., and 410-N directly output images corresponding to respective markers. For example, the multiple guide lamps 410-1, 410-2, ..., and 410-N can function as beam projectors. However, embodiments of the present invention are not limited thereto.

The multiple guide lamps 410-1, 410-2, ..., and 410-N output (i.e., display) markers in accordance with a control signal from the infrastructure 300. In some embodiments, the multiple guide lamps 410-1, 410-2, ..., and 410-N output at least one marker selected from among markers stored therein in accordance with a control signal from the infrastructure 300.

The multiple guide lamps 410-1, 410-2, ..., and 410-N output markers corresponding to a guide route determined by the infrastructure 300 or corresponding to a portion of the guide route, among multiple markers stored therein. Alternatively, the multiple guide lamps 410-1, 410-2, ..., and 410-N may output markers corresponding to respective marker identifiers received from the infrastructure 300.

In some embodiments, the multiple guide lamps 410-1, 410-2, ..., and 410-N are turned on and off in accordance with a control signal from the infrastructure 300.

The multiple guide lamps 410-1, 410-2, ..., and 410-N output (i.e., display) adjusts their light emission angle in accordance with a control signal from the infrastructure 300. In some embodiments, each of the multiple guide lamps 410-1, 410-2, ..., and 410-N adjusts its light emission angle such that a marker is displayed at a specific position in accordance with the control of the infrastructure 300.

The lamp controller 420 controls the multiple guide lamps 410-1, 410-2, ..., and 410-N in accordance with a control signal from the infrastructure 300.

The lamp controller 420 controls the multiple guide lamps 410-1, 410-2, ..., and 410-N in accordance with a control signal from the infrastructure 300. The infrastructure 300 can control the multiple guide lamps 410-1, 410-2, ..., and 410-N. However, in some embodiments, the infrastructure 300 may control the multiple guide lamps 410-1, 410-2, ..., and 410-N via the lamp controller 420. That is, the control of the multiple guide lamps 410-1, 410-2, ..., and 410-N by the infrastructure 300 is substantially performed by the lamp controller 420.

In some embodiments, examples of the lamp controller 420 include a circuit and a computer program that can perform logical operations and arithmetic calculations. For example, examples of the lamp controller 420 include a central processing unit (CPU) and a micro control unit (MCU) but are not limited thereto.

The lamp controller 420 controls the multiple guide lamps 410-1, 410-2, ..., and 410-N to output markers corresponding to a guide route determined by the infrastructure 300.

In some embodiments, the lamp controller 420 receives a guide route from the infrastructure 300, determines markers corresponding to the guide route, and controls the multiple guide lamps 410-1, 410-2, ..., and 410-N to output the determined markers.

In some embodiments, the lamp controller 420 receives marker identifiers from the infrastructure 300 and delivers the marker identifiers to the multiple guide lamps 410-1, 410-2, ..., and 410-N.

Although the multiple guide lamps 410-1, 410-2, ..., and 410-N and the lamp controller 420 are separated in the illustration of FIG. 9, a configuration in which the lamp controller 420 is integrated with each of the multiple guide lamps 410-1, 410-2, ..., and 410-N is also possible.

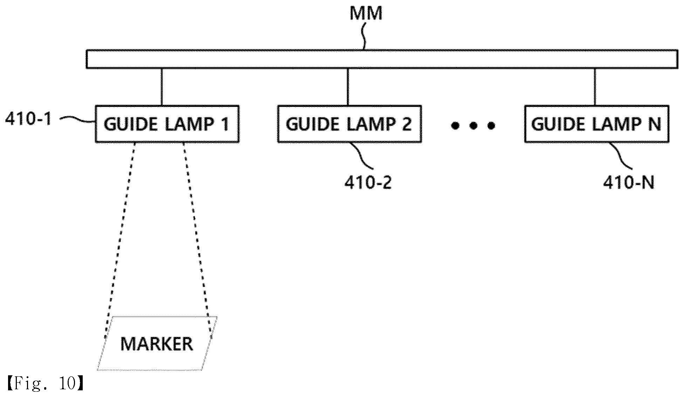

FIG. 10 is a block diagram illustrating guide lamps used in one example of the present disclosure. Referring to FIGS. 1 to 10, the multiple guide lamps 410-1, 410-2, ..., and 410-N can be connected to moving means (MM).

Since the multiple guide lamps 410-1, 410-2, ..., and 410-N are connected to the moving means, the multiple guide lamps 410-1, 410-2, ..., and 410-N can move. In some embodiments, the moving means is rails. When the moving means is rails, the multiple guide lamps 410-1, 410-2, ..., and 410-N can move in various directions along the rails.

The moving means is installed in the parking facility having the automated valet parking function. In some embodiments, the moving means is installed on the ceiling of a parking facility. In this case, the multiple guide lamps 410-1, 410-2, ..., and 410-N display markers on the ground surface (i.e., surface facing the ceiling) while moving with the help of the moving means.

The infrastructure 300 controls movement of the multiple guide lamps 410-1, 410-2, ..., and 410-N. In some embodiments, the infrastructure 300 can move each of the multiple guide lamps 410-1, 410-2, ..., and 410-N along the moving means to be positioned at a specific location.

In examples of the present disclosure, the multiple guide lamps 410-1, 410-2, ..., and 410-N are installed on the ceiling and the markers are displayed on the ground surface. Therefore, the multiple guide lamps 410-1, 410-2, ..., and 410-N can be installed with less constraints of installation area compared to the case where the guide lamps are installed on the ground surface. In addition, when the lamps are installed on the ground surface, there is a risk that the lamps are damaged or contaminated. In the case where the multiple guide lamps 410-1 to 410-N are installed on the ceiling and the markers are displayed on the ground surface, there is less possibility that the guide lamps malfunction due to damage or contamination.

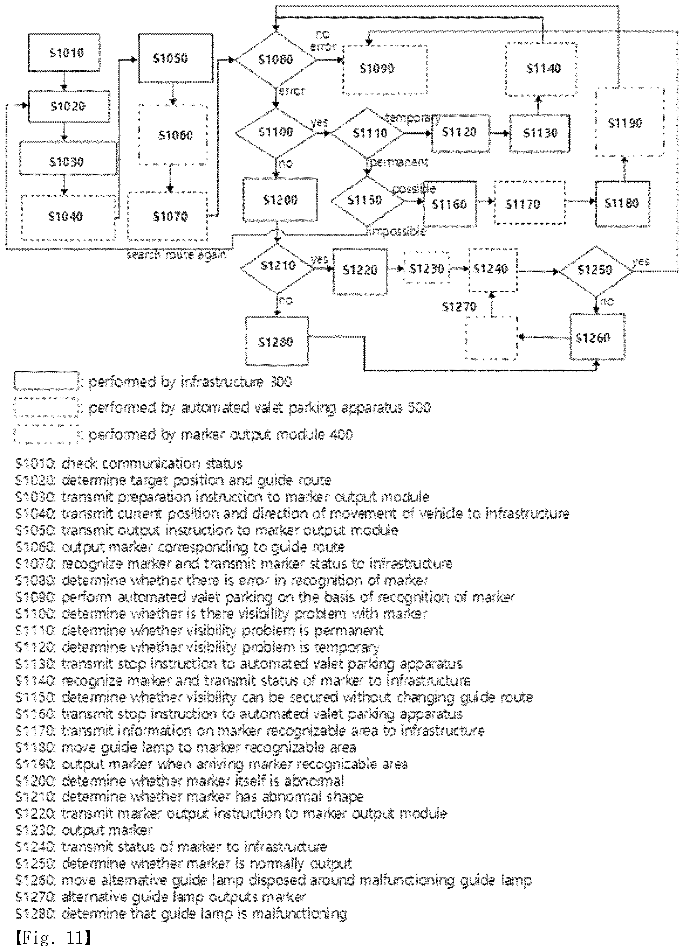

FIG. 11 is a flowchart illustrating operation of an automated valet parking system in accordance with one embodiment of the present disclosure. Referring to FIGS. 1 to 11, how the infrastructure 300, the marker output module 400, and the automated valet parking apparatus 500 operate will be described below.

The infrastructure 300 checks communication with the marker output module 400 and with the automated valet parking apparatus 500 in step S1010. In some embodiments, the infrastructure 300 determines whether communication with the marker output module 400 and with the automated valet parking apparatus 500 is normal.

The infrastructure 300 determines a target position and a guide route in step S1020. In some embodiments, the infrastructure 300 transmits either one or both of the target position and the guide route that are determined to the marker output module 400.

The infrastructure 300 transmits a preparation instruction to the marker output module 400 in step S1030. In some embodiments, the infrastructure 300 controls some of the multiple guide lamps 410-1, 410-2, ..., and 410-N to be prepared on the basis of the guide route. In some embodiments, the infrastructure 300 transmits a preparation signal to the guide lamps located around the determined guide route. The preparation signal is a signal instructing the guide lamps to switch from an idling state to an operating state.

The automated valet parking apparatus 500 transmits the current position of the automated valet parking apparatus 500 to the infrastructure 300 in step S1040. In some embodiments, the automated valet parking apparatus 500 transmits the current position and the moving direction of the automated valet parking apparatus 500 to the infrastructure 300.

The infrastructure 300 transmits a marker output instruction to the marker output module 400 in step S1050. In some embodiments, the infrastructure 300 transmits the marker output instruction to some guide lamps corresponding to the determined guide route, selected from among the multiple guide lamps 410-1, 410-2, ..., and 410-N. That is, the infrastructure 300 transmits the marker output instruction to the guide lamps located around the determined guide route. The infrastructure 300 transmits a guide route or a marker identifier along with the marker output instruction to the corresponding guide lamp.

The marker output module 400 outputs markers corresponding to the guide route in accordance with a control signal received from the infrastructure 300. In some embodiments, the multiple guide lamps 410-1, 410-2, ..., and 410-N move with the help of the moving means to output the markers corresponding to the guide route in accordance with a control signal received from the infrastructure 300. Specifically, the multiple guide lamps 410-1, 410-2, ..., and 410-N move to a junction of the guide route along which the automated valet parking apparatus 500 needs to travel and output the marker.

The automated valet parking apparatus 500 recognizes the marker and transmits the recognized marker to the infrastructure 300 in step S1070. In some embodiments, the automated valet parking apparatus 500 transmits an image, a recognition ratio, occurrence of a recognition error, and the like of the recognized marker to the infrastructure 300 in step S1070.

The infrastructure 300 checks whether an error has occurred in recognizing a marker in step S1080. In some embodiments, the infrastructure 300 examines the marker for visibility (clarity), reliability, or both. Specifically, the infrastructure 300 checks whether a recognition error has occurred on the basis of the state of the marker transmitted from the automated valet parking apparatus 500.

When it is determined that there is no recognition error for the corresponding marker, the automated valet parking apparatus 500 recognizes the marker and performs automated valet parking on the basis of information obtained from the recognized marker in step S1090.

When it is determined that a recognition error has occurred, the infrastructure 300 determines whether the cause of the recognition error is a visibility problem in step 51100. In some embodiments, the infrastructure 300 determines whether at least part of the marker is not shown in the field of view of the automated valet parking apparatus 500. Specifically, the infrastructure 300 determines whether there is an obstacle such as a wall which is present in the field of view of the automated valet parking apparatus 500 on the basis of information about the parking facility.

When it is determined that the cause of the recognition error is a visibility problem, the infrastructure 300 determines whether the visibility problem is permanent or temporary in step S1110.

In some embodiments, the infrastructure 300 determines whether the visibility problem is permanent or temporary on the basis of a determination of whether the obstacle present in the field of view of the automated valet parking apparatus 500 is a movable (removable) object or a fixed (non-removable) object. When the obstacle present in the field of view of the automated valet parking apparatus 500 is a movable object, it is determined that the visibility problem is temporary. On the contrary, when the obstacle present in the field of view of the automated valet parking apparatus 500 is a non-removable object, it is determined that the visibility problem is permanent.

When the visibility problem is determined to be temporary in Step S1120, the infrastructure 300 transmits a stop instruction to the automated valet parking apparatus 500 in step S1130. In some embodiments, after transmitting the stop instruction, the infrastructure 300 performs visibility checking on the marker.

The automated valet parking apparatus 500 recognizes the marker again and transmits the recognized marker to the infrastructure 300 in step S1140.

When the visibility problem is determined to be permanent, the infrastructure 300 determines whether it is possible to improve the visibility of the marker without changing the guide route of the automated valet parking apparatus 500 in step S1150. In some embodiments, the infrastructure 300 determines whether it is possible to improve or secure the visibility of the marker without changing the guide route by checking whether there is a nearby area where the automated valet parking apparatus can clearly recognize the marker, among areas around the guide route.

When it is determined that it is difficult to improve or secure the visibility of the marker, the infrastructure 300 searches again for a new guide route leading to the target position for the automated valet parking apparatus 500 in step S1020. In some embodiments, the infrastructure 300 selects a new guide route among guide route candidates except for the guide route that is previously used.

When it is determined that it is possible to improve or secure the visibility of the marker without changing the guide route, the infrastructure 300 transmits a stop instruction to the automated valet parking apparatus 500 in step S1160.

The automated valet parking apparatus 500 stops traveling and transmits information (for example, position information such as coordinates) about a specific nearby area where the automated valet parking apparatus 500 can clearly recognize the marker, among nearby areas thereof, to the infrastructure 300 in step S1170. In some embodiments, the automated valet parking apparatus 500 determines a nearby area where there is no obstacle present in the field of view, among nearby areas around the guide route, as a marker recognizable area, and transmits information about the marker recognizable area to the infrastructure 300. When the marker is displayed in the area where there is no obstacle in the field of view, the automated valet parking apparatus 500 can secure the visibility with respect to the marker.

The infrastructure 300 moves at least one of the multiple guide lamps 410-1, 410-2, ..., and 410-N to the marker recognizable area transmitted from the automated valet parking apparatus 500 in step S1180. In some embodiments, the infrastructure 300 moves a guide lamp that outputs the marker that is not visible, among the multiple guide lamps 410-1, 410-2, ..., and 410-N, to the marker recognizable area.

The guide lamp instructed to move to the marker recognizable area, among the guide lamps 410-1 to 410-N, moves to the marker recognizable area and outputs the marker in step S1190.

When it is determined that the cause of the recognition error is not a visibility problem, the infrastructure 300 determines whether the marker itself is abnormal in step S1200. That is, the infrastructure 300 determines a case where the automated valet parking apparatus 500 normally recognizes a specific marker but the recognized specific marker is abnormal.

The infrastructure 300 checks whether the recognized marker has an abnormal shape in step S1210. In some embodiments, the infrastructure 300 determines whether the marker has an abnormal shape on the basis of the state of the recognized marker transmitted from the automated valet parking apparatus 500.

When the recognized marker has an abnormal shape, the infrastructure 300 transmits a re-output instruction to the marker output module in step S1220 so that the marker output module outputs the marker again. In some embodiments, the infrastructure 300 transmits the marker re-output instruction to the corresponding guide lamp.

The corresponding guide lamp outputs again the marker in accordance with the marker re-output instruction in step S1230.

The automated valet parking apparatus 500 recognizes again the marker that is newly output and transmits the recognized marker to the infrastructure 300 in step S1240.

The infrastructure 300 checks whether the re-recognized marker is normal in step S1250. In some embodiments, the infrastructure 300 checks whether the marker that is newly output is normal or abnormal.

When it is determined that the re-recognized marker is normal, the automated valet parking apparatus 500 performs automated valet parking on the basis of information obtained from the recognized marker in step S1090.

When it is determined that the re-recognized marker is abnormal, the infrastructure 300 controls another guide lamp (i.e., alternative guide lamp) that is close to the guide lamp that has output the abnormal marker to the position corresponding to the abnormal marker in step S1260. In some embodiments, the infrastructure 300 obtains position information of the guide lamp (i.e., faulty guide lamp) that has output the abnormal marker, and controls the alternative guide lamp to move to the position of the faulty guide lamp with the help of the moving means on the basis of the acquired position information.

The alternative guide lamp outputs a marker there in step S1270. In some embodiments, the alternative guide lamp moves to the junction of the current guide route along which the automated valet parking apparatus 500 is to travel in accordance with a control signal received from the infrastructure 300 and outputs a marker there.

When a recognized marker has an abnormal shape, the infrastructure 300 determines that the corresponding guide lamp is faulty in step S1280, and controls an alternative guide lamp in the vicinity of the faulty guide lamp to the position where the faulty guide lamp is positioned in step S1260.

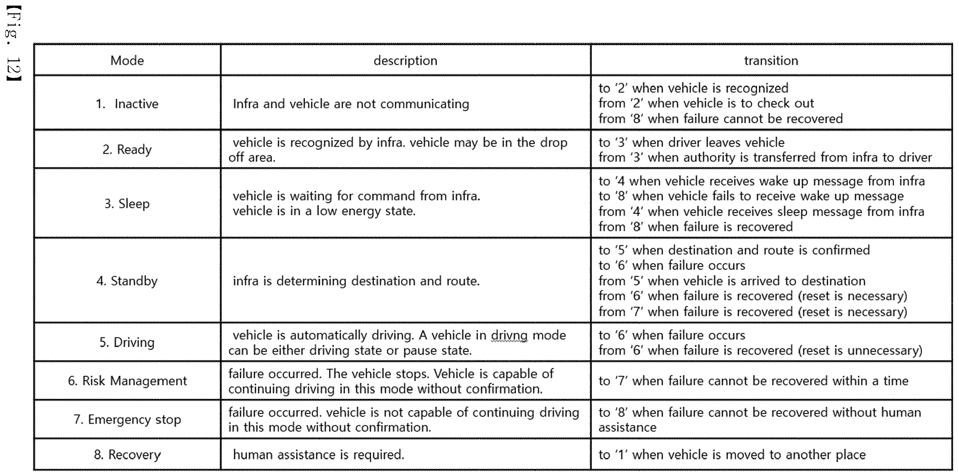

FIG. 12 is a view illustrating multiple modes for automated valet parking performed by an automated valet parking system in accordance with one embodiment of the present disclosure.

Referring to FIG. 12, a vehicle (i.e., automated valet parking apparatus) experiences a total of eight operating modes when performing automated valet parking: inactive, ready, sleep, standby, driving, risk management, emergency stop, and recovery.

The inactive mode refers to a mode in which settings for communication between the infrastructure and the vehicle are not yet configured. The inactive mode also refers to a mode in which the driver of the vehicle makes a reservation for automated valet parking. Therefore, in this mode, the driver has the driving authority. The vehicle enters the inactive mode at a stage between a state where the vehicle enters the parking lot and a state where the vehicle reaches the drop-off area (see FIG. 3).

The ready mode refers to a mode in which a check-in process is performed. In this mode, the infrastructure identifies the vehicle. In the mode, the driver still has the driving authority. In this mode, the vehicle may stay in the drop-off area (see FIG. 3) within the parking lot so that the infrastructure can identify the vehicle. Specifically, to identify the vehicle, the infrastructure reads the license plate of the vehicle using a camera installed in the parking lot. Alternatively, the infrastructure may identify the vehicle by receiving the vehicle identification number (VIN) of the vehicle through V2I communication with the vehicle.

The sleep mode refers to a mode in which the vehicle waits for an instruction from the infrastructure. The instructions from the infrastructure include dispatching. The instruction "dispatching" refers to transferring a sequence required to initiate the communication between the vehicle and the infrastructure. In this mode, the vehicle is in a power saving state (i.e. low power consumption state). That is, the vehicle is stopped, the engine and accessories of the vehicle are turned off, and the doors and windows of the vehicles are closed. However, in this mode, of the components of the vehicle, components used to communicate with the infrastructure must be ON state. The standby mode refers to a mode in which the infrastructure determines a destination (i.e., target position) of the vehicle and a driving route.

The destination may be a suitable empty parking space, and the driving route is a path leading to the destination from the current position. There may be multiple routes leading to the destination. The infrastructure selects the most suitable route from among the multiple routes. In the standby mode, the vehicle remains in a stop state.

The driving mode refers to a mode in which the vehicle travels to reach the destination within the parking lot before performing automated parking. The vehicle can autonomously travel at Level 4 (i.e. high automation level). While the vehicle is in the driving mode, the operating state of the vehicle is either a driving state or a pause state. In the driving mode, the vehicle switches between the driving state and the pause state depending on whether there is a temporary obstacle present on the driving path or not. The temporary obstacle refers to a movable obstacle that can move off from the driving path by itself. For example, the temporary obstacle may be an autonomous vehicle that is traveling along the driving path for the purpose of automated valet parking. The vehicle automatically enters the driving state when there is no temporary obstacle on the driving path and enters the pause state when a temporary obstacle appears on the driving path. The infrastructure can detect a temporary obstacle present on the route with sensors installed in the parking lot. Alternatively, the detection of a temporary obstacle can be achieved with the use of sensors built in the vehicle. The vehicle switches from the pause state to the driving state when the temporary obstacle is removed. When switching from the driving state to the pause state or from the pause state to the driving state, the infrastructure needs to be aware the current operating state of the vehicle each time the operating state changes. To this end, the infrastructure may detect occurrence of an event in which the operating state of the vehicle is switched by itself or the vehicle reports the infrastructure of the event. Temporary obstacles in the parking lot affect the operating state of all vehicles that are in the driving mode. Alternatively, another vehicle may also be informed of the switching of the operating state of the vehicle through vehicle-to-vehicle communication.

The risk management mode refers to a mode in which any error occurs during automated valet parking. In the description of the present disclosure, the error refers to a communication error between the vehicle and the infrastructure, an error associated with autonomous traveling of the vehicle (for example, abrupt stopping of the engine, inability to steer, malfunctioning of cameras or ultrasonic sensors, presence of a person in the vehicle, etc.), or an error associated with the facility of the infrastructure (for example, malfunctioning of sensors in the infrastructure, presence of an animal in the parking lot, presence of a non-temporary obstacle on the route, etc.). In the risk management mode, the vehicle stops driving and flashes lamps. A time duration during which the risk management mode continues exceeds a predetermined period of time, the risk management mode automatically changes to the emergency stop mode. The risk management mode is different from the emergency stop mode in that the vehicle can resume the autonomous traveling without intervention (approval or confirmation) of the infrastructure. The infrastructure needs to be aware of occurrence of an event in which the vehicle enters the risk management mode. To this end, the infrastructure may detect the event by itself or the vehicle may report the infrastructure of the event.

Switching to the emergency stop mode occurs when the time duration during which the risk management mode continues exceeds the predetermined period of time. In the case where the vehicle is in the emergency stop mode, the vehicle cannot resume the autonomous traveling until the infrastructure allows or confirms. The risk management mode is different from the emergency stop mode in that the vehicle can resume the autonomous traveling without intervention (approval or confirmation) of the infrastructure. The infrastructure needs to be aware of occurrence of an event in which the vehicle enters the emergency stop mode. To this end, the infrastructure may detect the event by itself or the vehicle may report the infrastructure of the event.

The recovery mode refers to a mode in which the error can be fixed only with human intervention when the vehicle is in the emergency stop mode. In the recovery mode, for example, a technician may move the vehicle with a tow truck.

Next, transition operations from one mode to another will be described.

A transition from the inactive mode to the ready mode occurs when the infrastructure starts an identification process on the vehicle. For example, when the vehicle enters the parking lot and arrives at the drop-off area, the infrastructure starts the identification process. A transition from the ready mode to the inactive mode occurs when the vehicle completes a check-out process. For example, when the vehicle arrives at the pickup area for the driver to board the vehicle and the vehicle leaves the pickup area after the driver makes a vehicle return request, the vehicle enters the inactive mode. A transition from the recovery mode to the inactive mode occurs when a non-fixable error has occurred in the automated valet parking procedures.

A transition from the ready mode to the sleep mode occurs when the driver exits the vehicle. In the sleep mode, the driving authority is delegated to the infrastructure from the driver. A transition from the sleep mode to the ready mode occurs when the driver sits in the driver's seat of the vehicle at the pickup area to leave the parking lot. At this time, the driving authority is delegated from the infrastructure to the driver.

A transition from the sleep mode to the ready mode occurs when the vehicle receives a wake-up instruction message from the infrastructure. In the case where the wake-up instruction message cannot be delivered to the vehicle from the infrastructure, the operating mode of the vehicle transits from the sleep mode to the recovery mode. A transition from the standby mode to the ready mode occurs when the vehicle receives a sleeping instruction message during the check-out process. A transition from the recovery mode to the sleep mode occurs when an error is fixed.

A transition from the standby mode to the driving mode occurs when the determination of the destination (i.e. target position) and the route by the infrastructure is completed. When an error occurs when the vehicle is in the standby mode, the standby mode is switched to the risk management mode. A transition from the driving mode to the standby mode occurs when the vehicle arrives at the destination (for example, parking space or pickup area). When any fault or error is fixed while the vehicle is in the risk management mode, a transition from the risk management mode to the standby mode occurs. In addition, when any fault or error is fixed while the vehicle is in the emergency stop mode, a transition from the emergency stop mode to the standby mode occurs. In the event in which the transition from the risk management mode or the emergency stop mode to the standby mode, it is required to set a new route.

A transition from the driving mode to the risk management mode occurs when an error or fault occurs while the vehicle is in the driving mode. A transition from the risk management mode to the driving mode occurs when an error or fault is fixed while the vehicle is in the risk management mode. In this case, it is not necessary to set a new route.

A transition from the risk management mode to the emergency stop mode occurs when an error or fault cannot be fixed until a predetermined period of time has elapsed after entering the risk management mode.

A transition from the emergency stop mode to the recovery mode occurs when the intervention of a technician is required to fix an error or fault while the vehicle is in the emergency stop mode.

A transition from the recovery mode to the inactive mode occurs when the vehicle is moved from the current location to a different location by the technician.

The examples of the present disclosure have an effect that the automated value parking apparatus can perform automated valet parking by recognizing markers displayed on the ground surface by the marker output unit installed on the ceiling. Therefore, there are less constraints of installation area for the guide lamps that display markers, and less damage to the installed guide lamps occurs. Therefore, it is possible to prevent deterioration of the marker displaying function.

In one or more exemplary embodiments, the described functions may be implemented by hardware, software, firmware, or any combination thereof. When implemented in the form of software, these functions may be stored on or transmitted to a computer-readable medium in the form of one or more instructions or codes. The computer-readable medium refers to any medium that can transfer a computer program from one computer to another. For example, it may be a communication medium or a computer-readable storage medium. The storage medium may be an arbitrary medium that can be accessed by a computer. The computer-readable media include, but are not limited to, RAMs, ROMs, EEPROMs, optical discs such as CD-ROM, magnetic disks, and any media that can be accessed by computers and which can be used to transfer a computer program in the form of instructions from one place to another. The computer-readable media are appropriately referred to as media that can be arbitrarily accessed by computers. For example, software can be transferred from a website, server or other remote sources through a cable or over a wireless channel. Examples of the cables include coaxial cable, fiber optic cable, twisted pair cable, and digital subscriber line (DSL), and the wireless channel uses infrared frequency waves, radio frequency waves, or ultrahigh frequency waves. In this case, the coaxial cable, the fiber optic cable, the twisted pair cable, the DL, and the wireless channels fall within the definition of the medium. The disks or discs include a compact disc (CD), a laser disc (LD), an optical disc (OD), a digital versatile disc (DVD), a floppy disk (FD), and a blu-ray disc. Discs generally refer to media from which data is optically read and disks refer to media from which data is magnetically read. Combinations of the above-mentioned media also fall within the definition of the computer-readable medium.

When embodiments are implemented as program code or code segments, the code segment may be a procedure, function, subprogram, program, routine, subroutine, module, software package, class, instructions, data structures, program command strings, or an arbitrary set of program command strings. One code segment may be connected with another code segment or a hardware circuit by transmitting and receiving information, data, arguments, parameters, or memory contents. Information, arguments, parameters, data, and the like may be delivered, sent, or transmitted using any suitable means such as memory sharing, message delivery, token delivery, network transmission, and the like. In addition, in some aspects, steps and/or operations of a method or algorithm may reside on a mechanically readable medium and/or a computer-readable medium in the form of a combination or set of one or more codes and/or one or more instructions that can be integrated into a computer program product.

When implemented as software, the techniques described herein can be implemented as modules (for examples, procedures, functions, etc.) that perform the functions described herein. Software codes may be stored in a memory unit and may be executed by a processor. The memory unit may be embedded in a processor or may be provided outside a processor. In this case, the memory unit may be communicatively connected with the processor by various means known in the art.

When implemented as hardware, processing units may be implemented as one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, electronic devices designed to perform the functions described herein, or any combination of these.

The above-mentioned ones include one or more exemplary embodiments. Of course, the above-described embodiments do not cover all possible combinations of components and/or methods to implement the present invention. Moreover, as to the scope of the terms "comprises" used in the detailed description or the appended claims, it is noted that it is similarly interpreted as "comprising" that is used as a transitional word in the claims.

As used herein, the terms "infer" and "inference" generally refer to a process of determining or inferring a state of a system, environment, and/or user from a set of observations of events and/or data. Inferring can be used to identify a specific situation or action, or can generate a probability distribution of certain states, for example. Inferring is probabilistic. That is, inferring may mean a calculation of a probability distribution of those states, based on study on data and events. Inferring may involve techniques used to construct a higher level event from a set of events and/or data. The inference refers to a process of inferring new events or actions from a set of observed events and/or stored event data, determining whether events are closely correlated in time, and determining whether the events and data come from one or several events and data sources.

Moreover, terms such as "component", "module", and "system" used herein may refer to, but not necessarily, computer entities such as hardware, firmware, any combination of hardware and software, software, and a software program being executed. For example, the term "component" may refer to, not necessarily, a process running on a processor, a processor, an object, an executable execution thread, a program, and/or a computer. By way of illustration, both an application running on a computing device and the computing device itself may fall within the definition of the component. One or more components may reside within a process and/or an execution thread. One or more components may be collectively provided in one computer or distributed in two or more computers. In addition, these components can be executed on various computer readable media having various data structures stored thereon. Components can communicate a signal containing one or more data packets (for example, data from an arbitrary component that interacts with a local system, a component of a distributed system, and/or other systems on the basis of a signal that is transmitted over a network such as Internet) with a local and/or remote process.

## Claims

1. A automated valet parking system using communication between an infrastructure (100) and an autonomous vehicle (200) to perform automated value parking,
**characterized in that** the autonomous vehicle (200) operates in at least one mode selected from among:
an inactive mode in which settings for communication between the infrastructure (100) and the vehicle (200) are not yet configured;
a ready mode in which the vehicle (200) stays at a drop-off area and is identified by the infrastructure (100) for checking in;
a sleep mode in which the autonomous vehicle (200) waits for an instruction transmitted from the infrastructure (100);
a standby mode in which the autonomous vehicle (200) waits for information on a destination and a route transmitted from the infrastructure (100);
a driving mode in which the vehicle (200) autonomously travels to the destination along the route within a parking lot;
a risk management mode in which an error occurs while the vehicle (200) is in the driving mode, wherein the error is at least one of a communication error between the vehicle (200) and the infrastructure (100), an error associated with autonomous traveling of the vehicle (200) comprising abrupt stopping of the engine, malfunctioning of cameras or ultrasonic sensors, presence of a person in the vehicle (200), and an error associated with the facility of the infrastructure (100) comprising malfunctioning of sensors in the infrastructure (100), presence of an animal in the parking lot, presence of a non-temporary obstacle on the route;
an emergency stop mode that is entered when a predetermined period of time has elapsed after the vehicle (200) enters the risk management mode; and
a recovery mode in which the vehicle (200) waits for the error to be fixed through human intervention because the error is not fixable without human intervention,
wherein a transition from the risk management mode to the standby mode or the driving mode occurs when the error is fixed while the vehicle (200) is in the risk management mode.

2. The system according to claim 1, wherein in the inactive mode, the vehicle (200) makes a reservation for automated valet parking.

3. The system according to claim 1, wherein in the ready mode, the infrastructure (100) identifies the vehicle (200) through video assistance using a camera installed in the drop-off area or through V2I communication between the vehicle (200) and the infrastructure (100) .

4. The system according to claim 1, wherein in the sleep mode, the vehicle (200) is in a power saving state.

5. The system according to claim 4, wherein in the sleep mode, the vehicle (200) waits for an instruction of dispatching a communication sequence required to start an automated valet parking procedure.

6. The system according to claim 1, wherein in the standby mode, the destination includes an empty parking space or a pickup area, and the route is a driving path leading to the destination.

7. The system according to claim 1, wherein in the driving mode, the vehicle (200) is in either a driving state in which the vehicle (200) autonomously travels to perform automated valet parking or a pause state in which the vehicle (200) temporarily stops in a case where a temporary obstacle is present on the route.

8. The system according to claim 7, wherein the vehicle (200) enters the stop state or reports the infrastructure of an event in which the vehicle (200) enters the stop state.

9. The system according to claim 1, wherein when the error is fixed while the vehicle (200) is in the risk management mode, a transition from the risk management mode to the driving mode occurs.

10. The system according to claim 9, wherein when the error is fixed while the vehicle (200) is in the emergency stop mode, a transition from the emergency stop mode to the driving mode occurs in a case of acquiring confirmation from the infrastructure.

11. The system according to claim 1, wherein when the vehicle (200) exits a pickup area to leave the parking lot, a transition from the ready mode to the inactive mode occurs.

12. The system according to claim 1, wherein a transition from the ready mode to the sleep mode occurs when a driver exits the vehicle (200) for the automated valet parking, and a transition from the sleep mode to the ready mode occurs when the driver boards the vehicle (200) for checking out.

13. The system according to claim 1, wherein a transition from the risk management mode or the emergency stop mode to the standby mode occurs when the error is fixed while the vehicle (200) is in the risk management mode and resetting of the route is necessary, and
wherein a transition from the risk management mode to the driving mode occurs when the error is fixed while the vehicle (200) is in the risk management mode and the resetting of the route is not necessary.

## Patentansprüche

1. Automatisiertes Parkservice-System, das eine Kommunikation zwischen einer Infrastruktur (100) und einem autonomen Fahrzeug (200) verwendet, um einen automatisierten Parkservice durchzuführen,
**dadurch gekennzeichnet, dass** das autonome Fahrzeug (200) in mindestens einem Modus arbeitet, der ausgewählt ist aus:
einem Inaktiv-Modus, in dem die Einstellungen für eine Kommunikation zwischen der Infrastruktur (100) und dem Fahrzeug (200) noch nicht konfiguriert sind;
einem Bereit-Modus, in dem das Fahrzeug (200) in einem Absetzbereich verbleibt und durch die Infrastruktur (100) zum Einchecken identifiziert wird;
einem Schlummer-Modus, in dem das autonome Fahrzeug (200) auf eine von der Infrastruktur (100) gesendete Instruktion wartet;
einem Bereitschafts-Modus, in dem das autonome Fahrzeug (200) auf von der Infrastruktur (100) gesendete Informationen über einen Zielort und eine Route wartet;
einem Fahr-Modus, in dem das Fahrzeug (200) autonom entlang der Route innerhalb eines Parkplatzes zum Zielort fährt;
einem Risikomanagement-Modus, in dem ein Fehler auftritt, während sich das Fahrzeug (200) im Fahr-Modus befindet, wobei der Fehler mindestens eines von Folgendem ist: ein Kommunikationsfehler zwischen dem Fahrzeug (200) und der Infrastruktur (100), ein mit dem autonomen Fahren des Fahrzeugs (200) verknüpfter Fehler, der ein abruptes Stoppen des Motors, eine Fehlfunktion von Kameras oder Ultraschallsensoren oder die Anwesenheit einer Person in dem Fahrzeug (200) umfasst, und ein Fehler, der mit der Einrichtung der Infrastruktur (100) verknüpft ist und
eine Fehlfunktion von Sensoren in der Infrastruktur (100), die Anwesenheit eines Tieres auf dem Parkplatz und die Anwesenheit eines nicht-temporären Hindernisses auf der Strecke umfasst;
einem Nothalt-Modus, in den eingetreten wird, wenn eine zuvor festgelegte Zeitspanne verstrichen ist, nachdem das Fahrzeug (200) in den Risikomanagement-Modus eingetreten ist; und
einem Wiederherstellungs-Modus, in dem das Fahrzeug (200) darauf wartet, dass der Fehler durch menschliches Eingreifen behoben wird, da der Fehler ohne menschliches Eingreifen nicht behoben werden kann,
wobei ein Übergang vom Risikomanagement-Modus in den Bereitschafts-Modus oder den Fahr-Modus erfolgt, wenn der Fehler behoben ist, während sich das Fahrzeug (200) im Risikomanagement-Modus befindet.

2. System nach Anspruch 1, wobei, im Inaktiv-Modus, das Fahrzeug (200) eine Reservierung für das automatische Parkservice vornimmt.

3. System nach Anspruch 1, wobei, im Bereit-Modus, die Infrastruktur (100) das Fahrzeug (200) durch Videounterstützung unter Verwendung einer im Absetzbereich installierten Kamera oder durch V2I-Kommunikation zwischen dem Fahrzeug (200) und der Infrastruktur (100) identifiziert.

4. System nach Anspruch 1, wobei, im Schlummer-Modus, das Fahrzeug (200) sich in einem Energiesparzustand befindet.

5. System nach Anspruch 4, wobei, im Schlummer-Modus, das Fahrzeug (200) auf eine Instruktion zum Versenden einer Kommunikationssequenz wartet, die zum Starten eines automatisierten Parkservice-Ablaufs erforderlich ist.

6. System nach Anspruch 1, wobei, im Bereitschafts-Modus, der Zielort eine leere Parkfläche oder einen Abholbereich umfasst und die Route ein Fahrpfad ist, der zum Zielort führt.

7. System nach Anspruch 1, wobei, im Fahr-Modus, das Fahrzeug (200) sich entweder in einem Fahrzustand befindet, in dem das Fahrzeug (200) autonom fährt, um einen automatisierten Parkservice durchzuführen, oder sich in einem Pausierungszustand befindet, in dem das Fahrzeug (200) vorübergehend stoppt, falls sich ein temporäres Hindernis auf der Strecke befindet.

8. System nach Anspruch 7, wobei das Fahrzeug (200) in den Stoppzustand eintritt oder der Infrastruktur ein Ereignis meldet, bei dem das Fahrzeug (200) in den Stoppzustand eintritt.

9. System nach Anspruch 1, wobei, wenn der Fehler behoben wird, während sich das Fahrzeug (200) im Risikomanagement-Modus befindet, ein Übergang vom Risikomanagement-Modus in den Fahr-Modus erfolgt.

10. System nach Anspruch 9, wobei, wenn der Fehler behoben wird, während sich das Fahrzeug (200) im Nothalt-Modus befindet, ein Übergang vom Nothalt-Modus zum Fahr-Modus erfolgt, wenn eine Bestätigung von der Infrastruktur erhalten wird.

11. System nach Anspruch 1, wobei, wenn das Fahrzeug (200) einen Abholbereich verlässt, um den Parkplatz zu verlassen, ein Übergang vom Bereit-Modus in den Inaktiv-Modus erfolgt.

12. System nach Anspruch 1, wobei ein Übergang vom Bereit-Modus in den Schlummer-Modus erfolgt, wenn ein Fahrer das Fahrzeug (200) für den automatisierten Parkservice verlässt, und ein Übergang vom Schlummer-Modus in den Bereit-Modus erfolgt, wenn der Fahrer zum Auschecken in das Fahrzeug (200) einsteigt.

13. System nach Anspruch 1, wobei ein Übergang vom Risikomanagement-Modus oder vom Nothalt-Modus in den Bereitschafts-Modus erfolgt, wenn der Fehler behoben wird, während sich das Fahrzeug (200) im Risikomanagement-Modus befindet und ein Zurücksetzen der Route erforderlich ist, und
wobei ein Übergang vom Risikomanagement-Modus zum Fahr-Modus erfolgt, wenn der Fehler behoben wird, während sich das Fahrzeug (200) im Risikomanagement-Modus befindet und kein Zurücksetzen der Route erforderlich ist.

## Revendications

1. Système de voiturier automatique utilisant une communication entre une infrastructure (100) et un véhicule autonome (200) pour effectuer un service de voiturier automatique,
**caractérisé en ce que** le véhicule autonome (200) fonctionne dans au moins un mode sélectionné parmi :
un mode inactif dans lequel des paramètres de communication entre l'infrastructure (100) et le véhicule (200) ne sont pas encore configurés ;
un mode prêt dans lequel le véhicule (200) reste dans une zone de dépose et est identifié par l'infrastructure (100) pour la procédure d'arrivée ;
un mode veille dans lequel le véhicule autonome (200) attend une instruction transmise depuis l'infrastructure (100) ;
un mode attente dans lequel le véhicule autonome (200) attend des informations sur une destination et un itinéraire transmises depuis l'infrastructure (100) ;
un mode conduite dans lequel le véhicule (200) se déplace de manière autonome vers la destination le long de l'itinéraire dans un parking ;
un mode gestion des risques dans lequel une erreur se produit alors que le véhicule (200) est dans le mode conduite, dans lequel l'erreur est au moins l'un parmi une erreur de communication entre le véhicule (200) et
l'infrastructure (100), une erreur associée au déplacement autonome du véhicule (200) comprenant un arrêt brutal du moteur, un dysfonctionnement de caméras ou de capteurs ultrasoniques, la présence d'une personne dans le véhicule (200), et une erreur associée à l'équipement de l'infrastructure (100) comprenant un dysfonctionnement de capteurs dans l'infrastructure (100), la présence d'un animal dans le parking, la présence d'un obstacle non temporaire sur l'itinéraire ;
un mode arrêt d'urgence qui est activé lorsqu'une période de temps prédéterminée s'est écoulée après que le véhicule (200) est entré dans le mode gestion des risques ; et
un mode récupération dans lequel le véhicule (200) attend que l'erreur soit corrigée par une intervention humaine, car l'erreur ne peut pas être corrigée sans intervention humaine,
dans lequel une transition du mode gestion des risques au mode attente ou au mode conduite se produit lorsque l'erreur est corrigée alors que le véhicule (200) est dans le mode gestion des risques.

2. Système selon la revendication 1, dans lequel, dans le mode inactif, le véhicule (200) effectue une réservation pour un service de voiturier automatique.

3. Système selon la revendication 1, dans lequel, dans le mode prêt, l'infrastructure (100) identifie le véhicule (200) par vidéoassistance à l'aide d'une caméra installée dans la zone de dépose ou par communication V2I entre le véhicule (200) et l'infrastructure (100) .

4. Système selon la revendication 1, dans lequel, dans le mode veille, le véhicule (200) est dans un état d'économie d'énergie.

5. Système selon la revendication 4, dans lequel, dans le mode veille, le véhicule (200) attend une instruction d'envoi d'une séquence de communication requise pour démarrer une procédure de voiturier automatique.

6. Système selon la revendication 1, dans lequel, dans le mode attente, la destination inclut une place de stationnement vide ou une zone de prise en charge, et l'itinéraire est un chemin de conduite menant à la destination.

7. Système selon la revendication 1, dans lequel, dans le mode conduite, le véhicule (200) est soit dans un état de conduite dans lequel le véhicule (200) se déplace de manière autonome pour effectuer un service de voiturier automatique, soit dans un état de pause dans lequel le véhicule (200) s'arrête temporairement dans le cas où un obstacle temporaire est présent sur l'itinéraire.

8. Système selon la revendication 7, dans lequel le véhicule (200) entre dans l'état d'arrêt ou signale à l'infrastructure un événement dans lequel le véhicule (200) entre dans l'état d'arrêt.

9. Système selon la revendication 1, dans lequel lorsque l'erreur est corrigée alors que le véhicule (200) est dans le mode gestion des risques, une transition du mode gestion des risques au mode conduite se produit.

10. Système selon la revendication 9, dans lequel lorsque l'erreur est corrigée alors que le véhicule (200) est dans le mode arrêt d'urgence, une transition du mode arrêt d'urgence au mode conduite se produit en cas d'acquisition d'une confirmation de l'infrastructure.

11. Système selon la revendication 1, dans lequel lorsque le véhicule (200) quitte une zone de prise en charge pour quitter le parking, une transition du mode prêt au mode inactif se produit.

12. Système selon la revendication 1, dans lequel une transition du mode prêt au mode veille se produit lorsqu'un conducteur quitte le véhicule (200) pour le service de voiturier automatique, et une transition du mode veille au mode prêt se produit lorsque le conducteur monte à bord du véhicule (200) pour la procédure de départ.

13. Système selon la revendication 1, dans lequel une transition du mode gestion des risques ou du mode arrêt d'urgence au mode attente se produit lorsque l'erreur est corrigée alors que le véhicule (200) est dans le mode gestion des risques et qu'une réinitialisation de l'itinéraire est nécessaire, et
dans lequel une transition du mode gestion des risques au mode conduite se produit lorsque l'erreur est corrigée alors que le véhicule (200) est dans le mode gestion des risques et que la réinitialisation de l'itinéraire n'est pas nécessaire.
